Europäisches Patentamt

European Patent Office

Office européen des brevets

(19)

(11) Veröffentlichungsnummer: **0 134 277 B2**

(12) **NEUE EUROPÄISCHE PATENTSCHRIFT**

(45) Veröffentlichungstag der neuen Patentschrift:
13.11.91 Patentblatt 91/46

(51) Int. Cl.$^5$: **C04B 35/10, B28B 3/26**

(21) Anmeldenummer: 83108397.7

(22) Anmeldetag: 26.08.83

(54) **Verfahren und Vorrichtung zum Herstellen von polykristallinen, transluzenten Sinterrohren.**

(43) Veröffentlichungstag der Anmeldung:
20.03.85 Patentblatt 85/12

(45) Bekanntmachung des Hinweises auf die
Patenterteilung:
16.03.88 Patentblatt 88/11

(45) Bekanntmachung des Hinweises auf die
Entscheidung über den Einspruch:
13.11.91 Patentblatt 91/46

(84) Benannte Vertragsstaaten:
DE FR GB IT NL

(56) Entgegenhaltungen:
EP-A- 0 072 190
DE-A- 1 571 364
DE-A- 1 696 440
DE-A- 2 143 703
DE-A- 2 852 048

(56) Entgegenhaltungen:
DE-A- 3 201 750
GB-A- 2 022 564
GB-A- 2 071 073
US-A- 4 396 595
DE-Prospekt "Zusoplast 126/3"

(73) Patentinhaber: Hoechst CeramTec
Aktiengesellschaft
Wilhelmstrasse 14
W-8672 Selb (DE)

(72) Erfinder: Groh, Heinrich, Dipl.-Ing.
Ahornstrasse 12
W-8560 Lauf/Pegnitz (DE)
Erfinder: Gradl, Reinhold, Ing. grad.
Tucherstrasse 16
W-8501 Rückersdorf (DE)

(74) Vertreter: Beck, Bernhard et al
HOECHST AKTIENGESELLSCHAFT Zentrale
Patentabteilung Postfach 80 03 20
W-6230 Frankfurt/Main 80 (DE)

EP 0 134 277 B2

## Beschreibung

Die Erfindung betrifft polykristalline, transluzente Sinterrohre und ein Verfahren zu ihrer Herstellung, wobei man von einem Aluminiumoxidpulver von über 99,5 Gew.-% Al$_2$O$_3$ ausgeht, dem geringe Mengen an Magnesiumoxid und gegebenenfalls Zirkonoxid zugesetzt werden. Das Ausgangsmaterial wird zu Formkörpern gezogen, einem Glühbrand unterworfen und dann in Wasserstoffatmosphäre oder Vakuum gesintert. Die Erfindung betrifft ferner eine spezielle Ziehvorrichtung, die eine erhebliche Verbesserung der Oberflächeneigenschaften der Röhrchen erlaubt.

Aus der D-A-29 18 729 geht ein Verfahren zur Herstellung eines polykristallinen, lichtdurchlässigen Aluminiumoxidrohres hervor, das in Hochdruck-Gasentladungslampen eingesetzt werden kann. Der gesinterte Körper weist eine durchschnittliche Teilchengröße der Aluminiumoxidkristalle von nicht weniger als 20 µm auf. Man geht vorzugsweise aus von einem Aluminiumoxidpulver mit einer Korngröße von nicht mehr als 1 µm und einer Reinheit von mehr als 99,5 %, das noch die Additive MgO, La$_2$O$_3$ und Y$_2$O$_3$ enthält. Die Masse wird gründlich vermischt und zu einem Formkörper verpresst. Das Brennen erfolgt in Wasserstoffatmosphäre oder Vakuum in zwei Stufen, nämlich einmal bei etwa 1500°C und ein zweites Mal zwischen 1650° und 1900°C. Dabei muß eine Bewisse Mindestaufheizgeschwindigkeit beachtet werden, damit eine Verbesserung der Oberflächenrauhigkeit erzielt wird, die in den Beispielen bei 3-7 µm lag. Zwei Sinterbrände in Vakuum oder Wasserstoffatmosphäre sind sehr kostenintensiv. Dies gilt insbesondere bei langen Haltezeiten. Außerdem läßt sich das Kristallwachstum im Brand nur schwer steuern, so daß die Reproduzierbarkeit schwierig ist.

Eine weitere Möglichkeit zur Erhöhung der in-line-Lichtübertragung ergibt sich aus der US-A 3 935 495, bei der die Oberfläche des gesinterten Aluminiumoxids mit einem geschmolzenen Flußmittel chemisch behandelt wird. Dabei werden die Unebenheiten an der Oberfläche verringert. Dieser Verfahrensschritt ist jedoch kompliziert und mit hohen Kosten verbunden. Außerdem wird durch das chemische Ätzen die Festigkeit des Sinterröhrchens verringert.

Es sind noch weitere polykristalline Aluminiumoxidwerkstoffe mit verbesserter in-line-Lichtübertragung bekannt, bei deren Herstellung man eine spezielle Auswahl von Additiven verwendet. Insbesondere ist hier die DE-A-31 08 677 zu nennen, nach deren Angaben durch Zugabe von 0,03 bis 0,15 Gew.-% MgO und von 0,002 bis etwa 0,12 Gew.-% einer Mischung von ZrO$_2$ und HfO$_2$ zum Aluminiumoxid eine Verbesserung der Qualität des Sinterkörpers erreicht wurde.

Danach muß das MgO ein notwendiger Bestandteil in der Aluminiumoxidkeramik sein, wenn beim Sinterverfahren eine hohe Transluzenz erzielt werden soll. Insbesondere steuert das MgO das Kornwachstum in den späteren Sinterstufen. Die Zugabe von ZrO$_2$, bzw. HfO$_2$, dient dazu, daß das Magnesium in der Sinterphase nicht zu stark verdampft und verhindert gleichzeitig das Auftreten von Spinell im Endprodukt.

Aus der DE-A-28 10 128 geht ferner hervor, daß zu der Ausgangsmischung noch ein Bindemittel und ein Gleitmittel zugegeben wird um die Extrusion eines gepreßten, kompakten Körpers in Form eines Sinterrohres zu ermöglichen. Um diese organischen Bestandteile vor dem Sintern zu entfernen, wird in einer sauerstoffhaltigen Atmosphäre bei Temperaturen von ca. 900-1200°C vorgesintert.

Weiterhin ist aus der DE-A-32 01 750 ein Verfahren zur Herstellung lichtdurchlässiger Sinterkörper aus Aluminiumoxid bekannt geworden, in der euch ein geeignetes Preßwerkzeug angegeben wird. Dem Aluminiumoxidpulver werden Magnesiumoxid, sowie die Additive Zirkonoxid, Hafniumoxid und/oder Ceroxid zugesetzt. Das Pulver wird dann in bekannter Weise mit organischen Plastifizierungsmitteln, z. B. 12 Gew.-% Paraffin und 1 Gew.-% Stearin, versetzt. Die Dichte der geformten Röhrchen liegt zwischen 40 und 70 % der theoretischen Dichte des Korunds. Beim Ziehen der Röhrchen wird insbesondere darauf geachtet, daß im Ziehwerkzeug eine günstige Materialströmung vorhanden ist. Die Formgebung erfolgt in zwei Schritten, durch Spritzgießen der Rohlinge und deren Verpreßen in der Wärme. Das Vorbrennen erfolgt bei 1100°C, das anschließende Sintern im Vakuumofen bei 1800°C. Es ist nachteilig, daß teures Aluminiumoxid-Pulver zum Einbetten benutzt wird und das anhaftende Pulver in einem nachfolgenden Arbeitsgang wieder entfernt werden muß. Die durchschnittliche Kristallitgröße liegt bei ca. 10 µm, was auf eine schlechte in-line-Lichtübertragung hindeutet. Auf den hohen Plastifizierungsanteil ist euch die erhebliche Schwindung zurückzuführen. Damit besteht die Gefahr, daß man zu viele Mikroporen im gesinterten Rohr erhält. Wenn größere Mengen am Plastifizierungsmittel nicht homogen in das Aluminiumpulver eingebracht wurden, kann euch die Geradlinigkeit des Sinterrohres leiden. Mit dem dort angegebenen Verfahren vermeidet man zwar das allgemein angewandte isostatische Pressen, aber man erhält noch kein Sinterrohr, das sowohl im Hinblick auf Lichtdurchlässigkeit wie Festigkeit optimiert wäre.

Aus der DE-B 16 96 440 ist die Herstellung von keramischen Körpern durch Extrusion von Massen bekannt, die mit PVA bzw. Methylzellulose als Bindemittelkomponente und Polyisobutylen oder Glycerinals Gleitmittelkomponente versetzt sind. Es sollen entweder niedrigsiedende Bindemittel mit hochsiedenden Gleitmitteln kombiniert werden oder niedrigsiedende Gleitmittel mit hochsiedenden Bindemitteln.

Bei der Herstellung von transluzenten Sinterrohren mit verbresserter in-line-Transmission gemäß US-A 43 96 595 wird unter Verwendung eines geeigneten Binders, wie PVA, und eines geeigneten organischen Gleitmittels, wie Polyethylenglycol, sowie Benetzungsmitteln und Entschäumer eine $Al_2O_3$-Formmasse hergestellt und dann durch isostatisches Verpressen verformt. Als Gleitmittel werden organische, wasserlösliche Substanzen eingesetzt.

Gemäß EP-A-072190 wird eine grüne, plastisch verformbare Masse, die hauptsächlich aus Aluminiumoxid und einem thermisch aushärtbaren Binder besteht, zu einem Rohr extrudiert, das Rohr durch ein unter Druck stehendes Fluid aufgeblasen und von innen an eine aufgeheizte Form angepresst. Der entstehende rohrähnliche Körper ist im Mittelteil dicker als an den Enden. Er wird ausgehärtet, der Form entnommen, getrocknet und zunächst bei 800 °C geglüht und dann bei 1800 °C im Vakuum zu einem transluzenten Körper gesintert.

Gemäß DE-A-28 52 048 wird eine rohrförmige Hülle für eine Hochdruck-Dampfentladungslampe aus polykristallinem, transparenten Aluminiumoxid beschrieben. Das Rohrmaterial weist eine mittlere Kristallitgröße von 20 bis 60 μm auf und enthält geringe Anteile an MgO, $La_2O_3$ und $Y_2O_3$. Biegefestigkeit von mindestens $320N/mm^2$ und Werte von mindestens 93 % für die Gesamtdurchlässigkeit werden nicht gleichzeitig erreicht.

Die Anforderungen an Lichtdurchlässigkeit und Festigkeit bilden die Hauptprobleme bei der späteren Verwendung eines Aluminiumoxydrohres als Hochdruck-Gasentladungslampe. Dieses Problem ist mit der Kristallitgröße des gesinterten $Al_2O_3$-Körpers verknüpft. Während mit steigender Kristallitgröße die Lichtdurchlässigkeit größer wird, erniedrigt sich die mechanische Festigkeit. Mit kleiner werdenden Kristallitgrößen haben die beiden Parameter eine umgekehrte Wirkung. Ferner hat sich herausgestellt, daß neben der Verwendung eines geeigneten Aluminiumoxidpulvers mit entsprechenden Additiven auch der Sintervorgang und die Formgebung die Eingenschaften des gesinterten Endprodukts erheblich beeinflussen.

Es bestand daher die Aufgabe, eine weitere Eigenschaftsverbesserung der Aluminiumoxid-Röhrchen hinsichtlich Transluzenz, Festigkeit und Oberflächenrauhigkeit zu erzielen.

Es wurde nun ein Verfahren zum Herstellung von polykristallinen, transluzenten Aluminiumoxid-Sinterrohren gefunden, bei dem ausgehend von über 99,5 Gew.-%igem Aluminiumoxidpulver mit einer Korngröße unter 1 μm, dem geringe Mengen an Magnesiumoxid und gegebenenfalls Zirkondioxid beigesetzt werden, die Oxide mit Binde- und Gleitmitteln angemacht werden, dieses Ausgangsmaterial zu Formkörpern gezogen wird und die erhaltenen Formkörper durch Glühbrand zwischen 900 °C und 1200 °C und Brennen und zwischen 1750 °C und 1900 °C in Wasserstoffatmosphäre oder Vakuum gesintert werden. Das Verfahren ist dadurch gekennzeichnet, daß man das Aluminiumoxidpulver unter Zugabe von 0,75 bis 2,0 Gew.-% eines Verflüssigungsmittels zu einem Schlicker vermahlt, diesen mit einem Gemisch von 0,1 - 0,5 Gew.-% Glycerin und 0,3 - 2,5 Gew.-% Öl im Verhältnis 1:3 - 1:5 unter Rühren aufschäumt, anschließend bei 80 bis 100 °C trocknet und dann mit einer Plastifizierermischung, hergestellt durch Vermischen von

a) einem wasserlöslichen PVA-Kleber oder einem wasserlöslichen, niedrig viskosen, schwach quellenden Methylcellulose-Kleber

b) einem Fett bzw. Öl,

c) Glycerin,

d) einem Benetzungstmittel,

sowie mit dem MgO und gegebenenfalls $ZrO_2$ vereinigt, man das entstehende Gemisch homogenisiert und mit Hilfe einer Kolbenpresse unter Verwendung eines Extrudierwerkzeuges mit einer Oberflächenrauhigkeit $R_a$ von weniger als 0,15 μm, welches aus einem Gehäuse und einem Ziehkern besteht, kalt verformt, wodurch der ungebrannte Formkörper eine Dichte von 50-70 Gew.-% der theoretischen Dichte von Aluminiumoxid und eine glänzende Oberfläche erhält.

Das der Erfindung zugrundeliegende Problem wird also unter anderem gelöst durch eine definierte Zugabe von Additiven, durch eine bestimmte Sinterführung, eine speziellen Auswahl von Gleit- und Bindemitteln für die rohe Formmasse und durch die Ausgestaltung des Ziehwerkzeuges.

Für das erfindungsgemäße Verfahren ist es von Vorteil, von einem Aluminiumoxidpulver mit einer spezifischen Oberfläche von ca. 14 m²/g auszugehen.

Als Verflüssigungsmittel für das Vermahlen des Aluminiumoxids eignet sich z.B. natriumfreies Ammoniak. Für das Vermahlen kommt eine Scheibenmühle in Frage, deren Mahlscheiben aus 99,7 %iger Aluminiumoxidkeramik bestehen. Auf diese Weise erhält man keine Verunreinigurigen durch den Abrieb, was z.B. beim Mahlen in üblichen Trommelmühlen möglich wäre. Anschließend erfolgt ein Absieben der Suspension, um Agglomerate zu entfernen, die später zu sogenannten "white spots" in der gesinterten Keramik führen würden. Diese Zerteilung der Agglomerate in der Scheibenmühle kann entfallen, wenn ein lockeres Aluminiumoxidpulver mit einer geringen Agglomeratgröße zur Verfügung steht. An die Zerteilung der Agglomerate schließt sich das Vereinigen der Plastifiziermischung mit dem Aluminiumoxidpulver und Additiven (MgO und gegebenenfalls $ZrO_2$) an.

In den gemahlenen Schlicker wird nach dem Sieben das Gemisch von Glycerin und Öl eingerührt, wodurch

EP 0 134 277 B2

eine Aufschäumung erfolgt. Nach dem Trocknen des Schlickers liegt ein sehr weiches und lockeres Pulver mit einer Restfeuchte von etwa 3 % vor, das sich beim späteren Mischen sehr gut zerteilen läßt. Dieses Pulver enthält somit auch bereits Bestandteile des später eingearbeiteten, pastenförmigen Plastifizierungsgemisches, wodurch sich später eine optimale Affinität des Pulvers zu diesem Gemisch ergibt und eine große Homogenität der plastifizierten Masse erreichen läßt. Die Temperatur beim Trocknen soll nicht über 100 °C steigen, damit ein Verkoken oder Verhärten der organischen Bestandteile verhindert wird.

Grundsätzlich werden die einzelnen Plastifizierungsbestandteile zu einer Paste angerührt, ehe sie dem Pulvergemisch der Oxide zugegeben werden. Es ist bevorzugt, das das $Al_2O_3$-Pulver mit 11,2-19,5 Gew.-% Plastifiziermischung vereinigt wird, die aus 3,0-4,5 Gew.-% PVA oder niedrigviskosen, schwach quellenden Methylzelluloseklebern, schwach quellenden Methylzelluloseklebern, 5,5-8,5 Gew.-% Ölen, 2,0 bis 4,5 Gew.-% Fetten, 0,5-1,5 Gew.-% Glycerin und 0,2-1,0 Gew.-% Benetzungsmittel besteht. Dabei sind PVA und schwach quellende Methylzellulose-Kleber wasserlöslich. Sie ermöglichen eine gute Benetzung und Zerteilung der Agglomerate. Die chemische Grundlage des PVA-Klebers sind polymere Hydroxylverbindungen, wobei die Viskosität einer 5 %igen Lösung 100 cP beträgt. Die Fette weisen kurzkettige Fettsäuren auf und das Öl ist ein Gemisch aus naphthenischen, paraffinischen und aromatischen Kohlenwasserstoffen mit natürlichen Fettderivaten und polaren Zusätzen. Diese pastenförmige Plastifiziermischng läßt sich gut im trockenen Aluminiumoxidpulver verteilen. Die gute Verteilung ist eine notwendige Voraussetzung für die spätere glatte Oberfläche des Sinterröhrchens.

Wird dagegen der Binder ohne vorheriges Vermischen mit den anderen Komponenten zum Oxidpulver gegeben, ist eine Klumpenbildung fast unvermeidlich; euch eine noch so feindosierte Zugabe von Klebern (= Bindern) als euch eine intensive Mischung ermöglichen es nicht, daß elle Aluminiumoxid-Partikelchen mit einem Kleberfilm umgeben werden. Vielmehr verkleben ganze Pulverpartien zu großen Klumpen.

Würde men dagegen zuerst des Öl zu Oxid geben, dann würde das $Al_2O_3$-Pulver mit seiner hohen spezifischen Oberfläche des Öl sofort absorbieren und bei Zugabe des Klebers fände keine ausreichende Benetzung des Pulvers mehr statt.

Nach dem Vermischen der Paste mit dem $Al_2O_3$-Pulver erfolgt die Zugabe der Additive in Form von Magnesiumoxid und gegebenenfalls Zirkonoxid. Als besonders zweckmäßig hat sich erwiesen, daß Magnesiumoxid in einer Menge im Bereich von 0,03-0,08 Gew.-%, vorzugsweise 0,05 Gew.-% und Zirkonoxid im Bereich von 0,002-0,05 Gew.-% vorzugsweise 0,01 Gew.-% beigemischt werden, wobei diese Oxide in der Vorstufe als Chloride, Carbonate und Acetate vorliegen. Nach dem Mischen wird die plastische Masse im Zylinder der Presse evakuiert und vorverdichtet. Anschließend erfolgt die Formgebung durch eine Kolbenpresse mit einem Preßdruck von 200-500 kg/cm² und einem speziellen Mundstück.

Eine wesentliche Voraussetzung für die Gestaltung eines Ziehwerkzeuges ist eine möglichst geringe Reibung zwischen Masse und Ziehwerkzeug; somit ist die Werkstoffwahl und die Oberflächengüte des Ziehwerkzeuges von entscheidender Bedeutung. Hartmetallwerkzeuge haben den Vorteil, daß bei Kontakt mit dem abrasiven $Al_2O_3$-Pulver kein Abrieb entsteht.

Wenn es zu Abrieb käme, wie beinormalen Stahlwerkzeugen, so würden sich an den Innenseiten des Ziehwerkzeuges Zonen mit unterschiedlichen Gleiteigenschaften ausbilden, mit der Folge einer ungleichmäßigen Verdichtung des Stranges. Dadurch würde der Strang an der Abriebstelle eine aufgerauhte Oberfläche aufweisen und sich eine optimale Oberflächengüte am gezogenen Röhrchen nicht ereichen lassen.

Eine besonders vorteilhafte Vorrichtung zum Ziehen eines Sinterrohres ist dadurch gekennzeichnet, daß das Extrudierwerkzeug ein poliertes Hartmetall-Extrudierwerkzeug ist, das aus einem Gehäuse und einem Ziehkern besteht, der durch sechs Stege von zwei hintereinander angeordneteten Dreisternen mit dem Gehäuse verbunden ist und bei dem die Stege gegeneinander um 60° aus der sich überdeckenden Lage verdreht sind, so daß in der axialen Projektion des Ziehkerns ein Sechsstern entsteht.

Die niedrige Rauhigkeit und die Verwendung eines polierten Hartmetallwerkzeugs fördern die Glättung der Oberfläche des austretenden Stränges, wenn das plastifizierte Oxidpulver an der Wandung des Ziehwerkzeuges entlanggleitet; dies fördert die Ausbildung eines optimalen Oberflächenglanzes.

Ganz allgemein soll ein Ziehwerkzeug besonders strömungsgünstig geformt sein, d.h. der entstehende Druck soll auf möglichst wenig Oberfläche treffen und sich auf das nach vorne verjüngende Ziehwerkzeug verteilen. Deshalb sollen konische Flächen möglichst klein gehalten werden; denn an zylindrischen Flächen ist die Reibung wesentlich geringer. Außerdem soll die Konstruktion symmetrisch angeordnet sein, damit die Ziehmesse keine ungleichmäßige Druckverteilung erfährt. Diese Forderungen werden vom erfindungsgemäßen Ziehwerkzeug erfüllt.

Der zwangsgeführte Strang erfährt zwar nochmals eine Teilung, eber verschweißt wieder im letzten Teil der Ziehdüse. Das Mundstück soll eine lange Auslaufstrecke aufweisen, damit sich eventuelle Verdichtungsunterschiede beim Austritt aus dem Mundstück abbauen. Durch die guten Verdichtungs- und Gleiteigenschaften der plastischen Masse bei Extrudieren werden die blättchenförmigen Aluminiumoxidkristalle gleichmäßig

4

ausgerichtet.

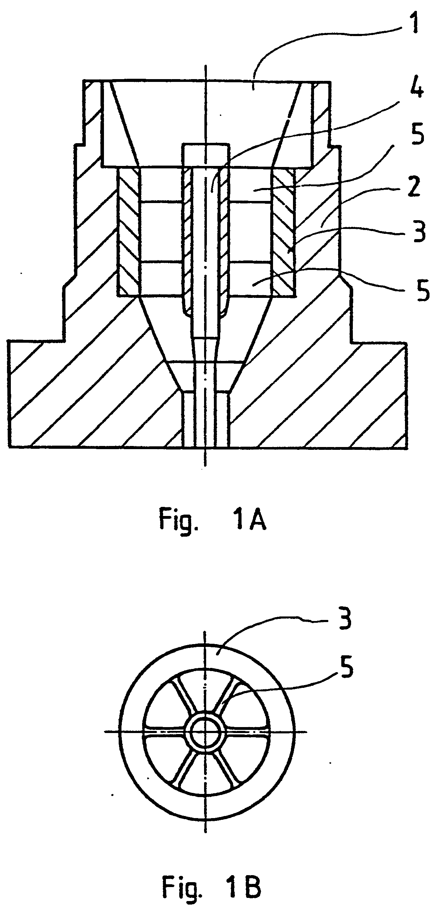

Das erfindungsgemäße Ziehwerkzeug ist in den Figuren 1 A und B näher dargestellt. Das Ziehwerkzeug besteht aus einem äußeren Gehäuse 2, in dem ein doppelter Dreistern 3 versetzt angeordnet ist. Die Versetzung ergibt sich aus Figur 1 B. Gehalten wird der Dorn 4 über die Stege 5.

Um eine gleichmäßige Trocknung zu erreichen, werden die Röhrchen auf gelochten Aluminiumblechen abgelegt. Die Trocknung selbst wird in staubfreien Kammern bei leichtem Überdruck und bei Umgebungstemperatur durchgeführt. Das Glühen zwischen 900 und 1200°C erfolgt mit einer Haltezeit von 12 Stunden in einem Elektroofen in oxidierender Atmosphäre. Diese Maßnahme ist sinnvoll, um vor dem Sintern (in Vakuum, bzw. in feuchter Wasserstoffatmosphäre) alle organischen Bestendteile aus dem zu sinternden Material auszutreiben. Keinesfalls darf hierbei die Temperatur 1250°C überschreiten, damit keine Vorsinterung des Materials eintritt. Die Aufheiztemperatur spielt eine wesentliche Rolle beim Sintern der Formkörper, da men damit nochmals die Korngröße steuern kann.

Aufheizgeschwindigkeiten von mindestens 800 °C/h, vorzugsweise zwischen 800 und 1000 °C/h, im Bereich von 1200-1900 °C ergeben ein optimales Sinterprodukt. Das Sintern im Hochvakuum erfordert ebenfalls bis zu 1900 °C. Dabei soll die Sintertemperatur 2-5 h konstant gehalten werden.

Gegenstand der Erfindung sind ferner polykristalline, transluzente Sinterrohre, bestehend aus Aluminiumoxid mit einer geringen Menge an Magnesiumoxid und gegebenenfalls Zirkonoxid, mit einer durchschnittlichen Kristallitgröße von 20-40 µm, einer Oberflächenrauhigkeit im Bereich von 0,1-1 µm, vorzugsweise bei 0,2 µm, und einer mechanischen Festigkeit von mindestens 320 N/mm², einer in-line-Lichtübertragung von über 64 %, gemessen mit Licht der Wellenlänge 0,94 µm bei einer Wandstärke von 0,6 mm und einer Totaltransmission zwischen 93 und 96 %.

Es ist vorteilhaft, daß beim erfindungsgemäßen Verfahren die Röhrchen im Rohzustand keiner Bearbeitung bedürfen, wie dies z.B. beim isostatischen Pressen durch Abwälzen der Fall ist. Eine Nachbehandlung der gesinterten Röhrchen ist unnötig. Daher entfällt die Gefahr, so beim Flußmittelpolieren, daß bei längeren Ätzzeiten eine Gefügeschädigung eintritt. Außerdem ist beim erfindungsgemäßen Verfahren der Energie- und Zeitaufwand beim Sintern gering, da der Brennzyklus nur zwischen 8 und 10 Stunden beträgt. Überraschenderweise wirkt sich das erfindungsgemäße Verfahren sowohl günstig auf die optischen Eigenschaften des gesinterten Aluminiumoxid-Formkörpers aus.

Durch die beschriebene strömungsgünstige Ausbildung der Extrudierdüse wird erreicht, daß die äußert glatte Oberfläche der Masse keine Verletzungen beim Extrudiervorgang erleidet. Außerdem ist die Gefahr gering, daß die Röhrchen krumm aus dem Ziehwerkzeug herauslaufen, da der Reibungswiderstand so gering wie möglich gehalten wird. Auch dies fördert die Maßgenauigkeit des gesinterten Produkts.

Die Erfindung wird durch die Beispiele näher erläutert. Es wurden verschiedene Varianten hinsichtlich des Dispergierens und Aufschäumens des Aluminiumoxidpulvers, der Vormischung des Klebers mit dem Öl und der Dotierung im Zusämmenhang mit der Oberflächenrauhigkeit untersucht. Die Ergebnisse sind in Tabelle 1 dargestellt.

**Tabelle 1:**

| Versuchs-bezeichnung | Sinter-bedingung (Temp./Haltezeit) [°C/h] | durchschn. Korngröße (µm) | durchschn. Rauhigkeit (µm) | In-line-Lichtüber-tragung (%) | Biegebruch-festigkeit (N/mm²) |
|---|---|---|---|---|---|
| V 1 | 1830/2 | 32 | 0,20 | 69 | 380 |
| V 2 | 1830/2 | 37 | 0,50 | 62 | 320 |
| V 3 | 1830/2 | 23 | 0,90 | 51 | 280 |
| V 4 | 1830/2 | 40 | 0,25 | 65 | 265 |
| V 5 | 1850/1 | 26 | 1,9 | 59 | 310 |

Die durchschnittliche Korngröße, die durchschnittliche Oberflächenrauhigkeit, die in-line-Lichtübertragung und die Biegebruchfestigkeit wurden an Sinterrohren vom Typ 70-Watt gemessen, wie sie in den Hochdrucknätriumdampfentladungslampen Verwendung finden. Die Ermittlung der durchschnitlichen Korngröße erfolgte durch Untersuchung der gesinterten Oberfläche mit dem Elektronenstrahlmikroskop.

Die Messung der Oberflächenrauhigkeit wurde mit einem Hommel-Tester durchgeführt, indem das Rohr in axialer Richtung über eine Länge von 5 mm abgetastet wurde. Bei der Messung der in-line-Lichtübertragung wurde auf die konkave Oberfläche ein Lichtbündel mit einer Wellenlänge von 0,94 µm und einem Einfallswinkel

von 6 °C geschickt. Die Lichtintensität unter einem Austrittswinkel von 60 °C wurde mit einer Meßsonde erfaßt.

Die Wandstärke des gesinterten Körpers betrug 0,6 ± 0,3 mm. Die Biegebruchfestigkeitmessung wurde nach der 3-Punkt-Methode durchgeführt. Der Auflageabstand betrug dabei 40 mm.

Beispiel 1

Die Versuche (V1) und (V2) zeigen den Einfluß der Dispergierung und des anschließenden Aufschäumen des Aluminiumoxidpulvers auf die Eigenschaften des Sinterproduktes (V1) ist erfindungsgemäß, (V2) stellt ein Vergleichsbeispiel dar.

Im Versuch (V1) werden 4000 g $Al_2O_3$-Pulver mtt einer Reinheit über 99,5 %, einer Teilchengröße kleiner 1 μm und einer spezifischen Oberfläche von ca. 14 cm²/g in eine Scheibenmühle gegeben, in der sich bereits 10 kg destilliertes Wässer mit 1 % Verflüssiger, wie z.B. natriumfreies Ammoniak, befinden. Die vorliegende Suspension wird dann 20 Minuten lang gemahlen und über ein Kunststoffsieb mit einer Maschenweite von 10 μm abgesiebt. In den Schlicker werden dann anschließend 0,2 Gew.-% Glycerin und 0,8 Gew.-% Öl mit einem Quirl eingerührt, dabei erhält man einen sahnig steifen Schlicker, der viele Luftbläschen erhält. Das Trocknen auf Blechen erfolgt bei 80 °C bis zu einer Restfeuchte von 3 %.

Die einzelnen Plastifizierungskomponenten werden gesondert zu einer Peste angerührt, wobei die Paste (bezogen auf das Pulver) selbst aus 3,75 % Gew.-% wasserlöslichen PVA-Binder, der im Verhältnis 1 : 4 in Wasser gelöst wird, 7 Gew.-% Öl und 3 Gew.-% Fette als euch 0,3 Gew.-% Benetzungsmittel und 1 Gew.-% Glycerin besteht. Diese Paste wird dann dem getrockneten $Al_2O_3$-Schaum zugeben, wobei gleichzeitig 0,265 Gew.-% Magnesiumacetat und 0,07 Zirkonchlorid untergerührt werden. Die Gesamtmischdauer beträgt ca. 1,5 Stunden, wobei ständig destilliertes Wasser bis zu insgesamt 7 Gew.-% zugegeben wird, um eine plastische Masse teigiger Konsistenz zu erhalten. Anschließend wird diese Masse in einer Kolbenpresse evakuiert und vorverdichtet und mittels einer Mehrlochscheibe zu Strängen von 3 mm Durchmesser extrudiert, wobei diese wiederum in einen Preßzylinder gegeben, evakuiert und vorverdichtet werden.

Das Preßwerkzeug hatte die Nennmaße ∅ 6,1 x 4,35 mm.

Der Preßdruck liegt über 200 kg/cm². Die extrudierten Röhrchen werden auf eine Länge von 800 mm abgeschnitten und auf gelochte Preßbleche gelegt. Nach dem Trocknen werden diese Stränge in einzelne Röhrchen geschnitten, gleichzeitig wird der Schneidstaub entfernt und diese Rohkörper werden dann stapelweise in oxidierender Atmosphäre bei 1100°C zwei Stunden lang geglüht. Bei diesem Brand wird das Magnesiumacetat und das Zirkonchlorid zu Magnesiumoxid und Zirkonoxid umgewandelt. Die anderen Bestendteile, die evtl. die optischen Eigenschaften beeinflussen können, werden ausgetrieben. Bei Sintertemperaturen von 1830°C mit einer Haltezeit von 2 Stunden und einer Aufheizgeschwindigkeit von 800° C/h erreichen die Rohkörper im Sinterbrand bei feuchter Wasserstoffatmosphäre ihr transluzentes Aussehen. Im Versuch V 2 wird der gleiche Versatz wie im Versuch V 1 benutzt, nur werden das Aluminiumoxidpulver ohne Dispergieren und Aufschäumen in den Mischer gegeben.

Wie die Ergebnisse in Tabelle 1 zeigen, trägt das Dispergieren und das Aufschäumen des Aluminiumoxidpulvers zur Verbesserung der Oberflächeneigenschaften bei. Beim Dispergieren werden in der Scheibenmühle die Agglomerate verunreinigungsfrei in einzelne Kristalle zerteilt und durch das Auschäumen wird ein Zusammenklumpen der einzelnen Kristalle verhindert, so daß im Mischer ein sehr leicht zerteilbares und den Plastifizierungskomponenten zugängliches Pulver vorliegt. Entfällt das Dispergieren und Schäumen, werden Agglomerate nicht zerteilt und die Oberflächengüte verschlechtert sich aufgrund der unterschiedlichen Korngröße. Außerdem kommt es zu Inhomogenitäten in der plastischen Massen, die sich als "white spots" im gesinterten Rohr zeigen. "White spots" führen zu einer Verminderung der Lichtdurchlässigkeit und zu einer Herabsetzung der mechanischen Eigenschaften.

Beispiel 2 (Vergleichsbeispiel)

Anhang des Versuches V 3 wird die Vormischung des Klebers mit dem Öl im Zusammenhang mit der Oberflächenrauhigkeit näher untersucht. Bei diesem Versuch wird ebenfalls 4000 g $Al_2O_3$-Pulver mit den bekannten Eigenschaften wie in Versuch 1 dispergiert und getrocknet. Anschließend werden in den Mischer 0,3 Gew.-% Benetzungsmittel und 3,75 Gew.-% PVA-Binder gegeben und jeweils in 5 Minuten Zeitabstand werden folgende Komponenten einzeln zugemischt: 7 Gew.-% Öl, 3 Gew.-% Fett, 1 Gew.-% Glycerin und ca. 7 Gew.-% destilliertes Wasser. Ebenfalls werden die Additive von 0,265 Gew.-% Magnesiumacetat und 0,07 Gew.-% Zirkonchlorid zugegeben. Die weitere Aufarbeitung erfolgt dann wie im Versuch V 1.

In der Tabelle 1 ist bei Versuch V 3 gegen V 1 eine Verschlechterung der Oberflächenrauhigkeit erkennbar. Erfolgt die Zugabe der Plastifizierungskomponenten in der genannten Reihenfolge, dann kommt es zu Inhomogenitäten der plastischen Massen, da der Binder nicht gleichmäßig im feinen $Al_2O_3$-Pulver verteilt ist. Damit läßt sich die plastische Masse nicht mehr gleichmäßig verdichten, so daß sich auch die Extrudiereigenschaften infolge unterschiedlicher Gleitwirkung verschlechtern. Diese Inhomogenitäten werden dann als "white spots" im gesinterten Röhrchen sichtbar.

Beispiel 3 (Vergleichsbeispiel)

Im Versuch V 4 wird die Dotierung gegenüber V 1 geändert. Die Herstellung der Sinterrörchen erfolgt analog zum Verfahren im Versuch 1, aber mit der Ausnahme, daß die Dotierung nur aus 0,265 Gew.-% Magnesiumacetat, besteht und das Sintern im Vakuum erfolgt.

Wie aus der Tabelle 1 ersichtlich, läßt sich zwar ein Einfluß auf die Oberflächenrauhigkeit nicht feststellen, aber das Kristallgefüge zeigte ein etwas ungleichmäßiges Koinwachstum, was aber die in-line-Lichtübertragung nicht beeinträchtigte. Die Art der Dotierung scheint somit keinen Einfluß auf die Oberflächenrauhigkeit des Sinterröhrchens zu haben.

Um noch einmal die Vorteile des erfindungsgemäßen Extrudierverfahrens gegenüber dem üblichen isostatischen Preßverfahren herauszustellen, wurde Vergleichsversuch V 5 in Tabelle 1 aufgenommen. Bei diesem Versuch wurden ebenfalls 4000 g $Al_2O_3$-Pulver wie in Versuch V 1 gemahlen und der Schlicker sprühgetrocknet. Das Sprühtrockengranulat wurde dann bei 1400 bar isostatisch in einem rohrförmigen Formkörper verpreßt. Das auf einem Dorn gepreßte Rohr wird dann auf der äußersten Mantelfläche abgewalzt.

Dabei werden an der Oberflächenrauhigkeit die Nachteile dieses Verfahrens deutlich. Die optimale Oberflächenqualität wird trotz sorgfältiger Bearbeitung mit feinen Schleifscheiben nicht erreicht. Es entstehen Drehriefen, die zu einer Streuung des Lichtes an der Oberfläche führen und so die Lichtdurchlässigkeit verschlechtern. Außerdem findet durch die allseitige Druckaufschlagung beim isostatischen Pressen keine Ausrichtung der blättchenförmigen Kristallite parallel zur Oberfläche des Rohres statt, so daß die Oberflache rauher bleibt.

**Patentansprüche**

1. Verfahren zum Herstellen von polykristallinen, transluzenten Aluminium-Sinterrohren ausgehend von über 99,5 Gew.-%igem Aluminiumoxidpulver mit einer Korngröße unter 1 µm, dem geringe Mengen an Magnesiumoxid und gegebenenfalls an Zirkondioxid beigesetzt werden, wobei die Oxide mit Binde- und Gleitmitteln angemacht werden, dieses Ausgangsmaterial zu Formkörpern gezogen wird, die erhaltenen Formkörper durch Glühbrand zwischen 900 °C und 1200 °C und Brennen zwischen 1750 °C und 1900 °C in Wasserstoffatmosphäre oder Vakuum gesintert werden, dadurch gekennzeichnet, daß man das Aluminiumoxidpulver unter Zugabe von 0,75 bis 2,0 Gew.-% eines Verflüssigungsmittels zu einem Schlicker vermahlt, diesen mit einem Gemisch von 0,1 - 0,5 Gew.-% Glycerin und 0,3 - 2,5 Gew.-% Öl im Verhältnis 1:3 - 1:5 unter Rühren aufschäumt, anschließend bei 80 bis 100 °C trocknet und dann mit einer Plastifiziermischung, hergestellt durch Vermischen von
a) einem wasserlöslichen PVA-Kleber oder einem wasserlöslichen, niedrig viskosen, schwach quellenden Methylcellulose-Kleber,
b) einem Fett bzw. Öl,
c) Glycerin,
d) einem Benetzungsmittel,
sowie mit dem MgO und gegebenenfalls $ZrO_2$ vereinigt, man das entstehende Gemisch homogenisiert und mit Hilfe einer Kolbenpresse unter Verwendung eines Extrudierwerkzeugs mit einer Oberflächenrauhigkeit $R_a$ von weniger als 0,15 µm, welches aus einem Gehäuse und einem Ziehkern besteht, kalt verformt, wodurch der ungebrannte Formkörper eine Dichte von 50 - 70 Gew.-% der theoretischen Dichte von Aluminiumoxid und eine glänzende Oberfläche erhält.

2. Verfahren nach Anspruch 1, dadurch gekennzeichnet, daß das $Al_2O_3$-Pulver mit 11,2-19,5 Gew.-% Plastifiziermischung vereinigt wird, die aus 3,0-4,5 Gew.-% PVA oder niedrig viskosen, schwach quellenden Methylcelluloseklebern, 5,5-8,5 Gew.-% Ölen, 2,0-4,5 Gew.-% Fetten, 0,5-1,5 Gew.-% Glycerin und 0,2-1,0 Gew.-% Benutzungsmittel besteht.

3. Verfahren nach Anspruch 1 oder 2, dadurch gekennzeichnet, daß die chemische Grundlage des PVA-Klebers polymere Hydroxylverbindungen sind und bei den Fetten es sich um stark gesättigte, kurzkettige Fettsäuren handelt als auch die Öle ein Gemisch von naphthenischen, paraffinischen und aromatischen Kohlenwasserstoffen mit natürlichen Fettderivaten und polaren Zusätzen sind.

4. Verfahren nach Anspruch 1, dadurch gekennzeichnet, daß die Sintertemperatur zwischen 2 bis 5 Stunden konstant gehalten wird und die Aufheizgeschwindigkeit zwischen 1200 und 1900 °C mindestens 800 °C pro Stunde beträgt.

5. Verfahren nach Anspruch 1, dadurch gekennzeichnet, daß dem Aluminiumoxidpulver als Additive Magnesiumoxid in einer Menge im Bereich von 0,03-0,08 Gew.-%, vorzugsweise 0,05 Gew.-% und Zirkondioxid im Bereich von 0,002-0,05 Gew.-%, vorzugsweise 0,01 Gew.-%, beigemischt werden, wobei diese Oxide in der Vorstufe als Chloride, Carbonate oder Acetate vorliegen.

6. Vorrichtung zum Ziehen eines Sinterrohres nach Anspruch 1, dadurch gekennzeichnet, daß das Extrudierwerkzeug ein poliertes Hartmetallextrudierwerkzeug ist, das aus einem Gehäuse und einem Ziehkern besteht, der durch 6 Stege von 2 hintereinander angeordneten Dreisternen mit dem Gehäuse verbunden ist und die Stege gegeneinander um 60° aus der sich überdeckenden Lage verdreht sind, so daß in der axialen Projektion des Ziehkerns ein Sechsstern entsteht.

7. Polykristalline transluzente Sinterrohre, bestehend aus Aluminiumoxid mit einer geringen Menge an Magnesiumoxid und gegebenenfalls Zirkondioxid, dadurch gekennzeichnet, daß die gesinterten Formkörper eine durchschnittliche Kristallitgröße von 20 bis 40 µm aufweisen, ihre Oberflächenrauhigkeit im Bereich von 0,1 - 1 µm, vorzugsweise 0,2 µm liegt, die mechanische Festigkeit mindestens 320 N/mm² beträgt, die In-Line-Lichtübertragung über 64 %, gemessen mit Licht der Wellenlänge 0,94 µm bei einer Wandstärke von 0,6 mm, ausmacht und die Totaltransmission zwischen 93 und 96 % liegt.

## Claims

1. Process for producing polycrystalline, translucent aluminum oxide sintered tubes, starting from more than 99.5% by weight pure aluminum oxide powder having a grain size of less than 1 µm, with an addition of small quantities of magnesium oxide and if appropriate zirconium dioxide, the oxides being mixed with binders and lubricants, this starting material being drawn to give molded bodies, and the molded bodies obtained being sintered by prefiring between 900°C and 1200°C and firing between 1750°C and 1900°C in a hydrogen atmosphere or in vacuo, characterized in that the aluminum oxide powder is ground with the addition of 0.75 to 2.0% by weight of a fluidizing agent to give a slurry, the latter is foamed with a mixture of 0.1 - 0.5% by weight of glycerol and 0.3 - 2.5% by weight of oil in a ratio of 1:3 - 1:5, with stirring, and subsequently dried at 80 to 100°C and then combined with a plasticizing mixture prepared by mixing

   a) a water-soluble PVA adhesive or a water-soluble, low-viscosity, weakly-swelling methylcellulose adhesive,
   b) a fat or oil,
   c) glycerol and
   d) a wetting agent,

   this mixture is combined with the MgO and if appropriate $ZrO_2$, and the resulting mixture is homogenized and cold-formed by means of a piston press using an extrusion die having a surface roughness $R_a$ of less than 0.15 µm and comprising a housing and a drawing mandrel, whereby the unfired molded body is provided with a density of 50 - 70% by weight of the theoretical density of aluminum oxide and a glossy surface.

2. Process according to claim 1, characterized in that the $Al_2O_3$ powder is combined with 11.2 - 19.5% by weight of a plasticizing mixture which is composed of 3.0 - 4.5% by weight of PVA or low-viscosity, weakly-swelling methylcellulose adhesives, 5.5 - 8.5% by weight of oils, 2.0 - 4.5% by weight of fats, 0.5 - 1.5% by weight of glycerol and 0.2 - 1.0% by weight of a wetting agent.

3. Process according to claim 1 or 2, characterized in that, chemically, the PVA adhesive is based on polymeric hydroxyl compounds and the fats are highly saturated, short-chain fatty acids and the oils are a mixture of naphthenic, paraffinic and aromatic hydrocarbons with natural fat derivatives and polar additives.

4. Process according to claim 1, characterized in that the sintering temperature is kept constant for a period of between 2 and 5 hours and the heating rate between 1200 and 1900°C is at least 800°C per hour.

5. Process according to claim 1, characterized in that magnesium oxide in a quantity within the range from 0.03 to 0.08% by weight, preferably 0.05% by weight, and zirconium dioxide within the range from 0.002 to 0.05% by weight, preferably 0.01% by weight, are admixed as additives to the aluminum oxide powder, these oxides being in the form of chlorides, carbonates or acetates in the precursor.

6. Apparatus for drawing a sintered tube according to claim 1, characterized in that the extrusion die is a polished hard carbide extrusion die comprising a housing and a drawing mandrel which is connected to the housing by 6 webs of 2 three-point spiders arranged one behind the other, the webs being mutually offset rotationally by 60°C from the overlapping position, so that a six-point spider results in the axial projection of the drawing mandrel.

7. Polycrystalline, translucent sintered tubes consisting of aluminum oxide with a small quantity of magnesium oxide and, if appropriate, zirconium dioxide, characterized in that the sintered molded bodies have an average crystallite size of 20 to 40 μm, a surface roughness in the range from 0.1 to 1 μm, preferably 0.2 μm, a mechanical strength of at least 320 N/mm², and an in-line light transmission of more than 64%, measured with light of 0.94 μm wavelength at a wall thickness of 0.6 mm, the total transmission being between 93 and 96%.

**Revendications**

1. Procédé de préparation de tubes frittés d'oxyde d'aluminium polycristallins, translucides, en partant d'une poudre d'oxyde d'aluminium à plus de 99,5 % en poids, ayant une granularité inférieure à 1 micron, à laquelle on ajoute de faibles quantités d'oxyde de magnésium et le cas échéant de bioxyde de zirconium, les oxydes étant délayés avec des liants et des lubrifiants, cette matière de départ étant extrudée en objets moulés, les objets moulés obtenus étant frittés par un petit feu entre 900°C et 1200°C et une calcination entre 1750°C et 1900°C en atmosphère d'hydrogène ou sous vide, caractérisé en ce qu'on broie la poudre d'oxyde d'aluminium avec addition de 0,75 à 2,0 % en poids d'un fluidifiant pour obtenir une barbotine, en ce qu'on fait mousser cette barbotine avec un mélange de 0,1 - 0,5 % en poids de glycérol et 0,3 - 2,5 % en poids d'huile dans le rapport 1:3 - 1:5, en agitant, puis en ce qu'on la sèche à 80 à 100°C, après quoi on la combine à un mélange de plastification préparé par mélange

   a ) d'une colle de PVA soluble dans l'eau ou d'une colle de méthylcellulose soluble dans l'eau, faiblement vitreuse, gonflant faiblement,
   b) d'une graisse ou d'une huile,
   c) de glycérol,
   d) d'un mouillant,

ainsi qu'avec le MgO et le cas échéant le ZrO₂, en ce qu'on homogénéise le mélange formé et en ce qu'on le moule à froid à l'aide d'une presse à piston, en utilisant un outil d'extrusion ayant une rugosité superficielle $R_a$ inférieure à O,15 μm, lequel se compose d'une enveloppe et d'un poinçon d'extrusion, grâce à quoi l'objet moulé non calciné acquiert une densité de 50 à 70 % en poids de la densité théorique de l'oxyde d'aluminium et une surface brillante.

2. Procédé selon la revendication 1, caractérisé en ce que la poudre d'Al₂O₃ est combinée à 11,2 - 19,5 % en poids d'un mélange de plastification qui se compose de 3,0 à 4,5 % en poids de PVA ou de colles de méthylcellulose de faible viscosité, glonflant peu, de 5,5 à 8,5 % en poids d'huiles, de 2,0 à 4,5 % en poids de graisses, de 0,5 à 1,5 % en poids de glycérol et de 0,2 à 1,0 % en poids d'agent mouillant.

3. Procédé selon les revendications 1 ou 2, caractérisé en ce que la colle de PVA est basée chimiquement sur des composés hydroxylés et en ce que les graisses sont des acides gras à chaîne courte, fortement saturés, et les huiles sont un mélange d'hydrocarbures naphténiques, paraffiniques et aromatiques avec des dérivés gras naturels et des additifs polaires.

4. Procédé selon la revendication 1, caractérisé en ce que la température de frittage est maintenue constante entre 2 et 5 heures, et en ce que la vitesse de chauffage est d'au moins 800°C par heure entre 1200 et 1900°C.

5. Procédé selon la revendication 1, caractérisé en ce qu'on ajoute à la poudre d'oxyde d'aluminium, comme additifs, de l'oxyde de magnésium dans une quantité dans le domaine de 0,03 à 0,08 % en poids, de préférence de 0,05 % en poids, et du bioxyde de zirconium dans le domaine de 0,002 à 0,05 % en poids, de préférence de 0,01 % en poids, ces oxydes étant présents dans l'état préférable sous forme de chlorures, de carbonates ou d'acétates.

6. Dispositif pour l'extrusion d'un tube fritté selon la revendication 1, caractérisé en ce que l'outillage d'extrusion est un outillage d'extrusion de métal dur poli, qui se compose d'une enveloppe et d'un poinçon d'extrusion, lequel est lié à l'enveloppe par six ailettes de deux étoiles à trois branches disposées l'une derrière l'autre , et en ce que les ailettes sont tournées de 60° à partir de la position de coïncidence, de telle sorte qu'il apparaît, dans la projection axiale du poinçon d'extrusion, une étoile à six branches.

7. Tubes frittés polycristallins, translucides, constitués d'oxyde d'aluminium avec une faible quantité d'oxyde de magnésium et le cas échéant de dioxyde de zirconium, caractérisés en ce que les objets moulés frittés présentent une taille moyenne de cristallites de 20 à 40 microns, en ce que leur rugosité superficielle est dans le domaine de 0,1 à 1 micron, de préférence de 0,2 micron, en ce que la résistance mécanique est d'au moins 320 N/mm², en ce que la transmission de lumière "in-line", mesurée avec une lumière d'une longueur d'onde de 0,94 microns, pour une épaisseur de paroi de 0,6 mm, représente 64 %, et en ce que la transmission totale est entre 93 et 96 %.

Fig. 1A

Fig. 1B